# EUROPEAN PATENT APPLICATION

(11) **EP 4 438 697 A2**
(43) Date of publication of application: **02.10.2024**
(21) Application number: 24166840.9
(22) Date of filing: 27.03.2024
(51) Int. Cl.: C10G 65/10, C10G 67/04, C10G 47/26, C10G 31/10, C10G 7/00, C01B 32/354, B01J 6/00

(54) **METHOD FOR COMBINED HYDROCRACKING OF HEAVY PETROLEUM FEEDSTOCK, COMPRISING THE SEPARATION OF A SPENT ADDITIVE FROM UNCONVERTED HYDROCRACKING RESIDUE AND ITS DRYING**

(30) Priority: 30.03.2023 RU 2023107817
(71) Applicant: TAIF Joint-Stock Company, 420012 Kazan (RU)
(72) Inventor: SHIGABUTDINOV, Albert Kashafovich, 420015 Kazan (RU); PRESNYAKOV, Vladimir Vasilievich, 420081 Kazan (RU); SHIGABUTDINOV, Ruslan Albertovich, 420081 Kazan (RU); AKHUNOV, Rustem Nazyifovich, 420140 Kazan (RU); IDRISOV, Marat Rinatovich, 420081 Kazan (RU); NOVIKOV, Maksim Anatolievich, 423548 Nizhnekamsk (RU); KHRAMOV, Aleksei Aleksandrovich, 423582 Nizhnekamsk (RU); KONOVNIN, Andrei Aleksandrovich, 423584 Nizhnekamsk (RU); URAZAIKIN, Artur Semenovich, 423571 Nizhnekamsk (RU); SUBRAMANIAN, Viswanathan Anand, Sugar Land, 77479 (US)
(74) Representative: Hannke Bittner & Partner mbB Regensburg

(57) **Abstract**

The invention relates to the field of petroleum processing, particularly to a method for processing heavy petroleum feedstock. The method for processing heavy petroleum feedstock comprises the steps of: slurry-phase hydrocracking (SPH) of a feedstock including a heavy petroleum feedstock and a carbon additive, followed by separation into a SPH-subjected feedstock stream and a heavy residue stream, wherein the heavy residue stream is a slurry of an unconverted high-boiling residue and a spent carbon additive; hydrocracking of the feedstock hydrocracking products obtained at the SPH step, in a gas phase with a fixed bed catalyst, followed by fractionation of resulting hydrocracking products; performing a method for purifying an unconverted residue of a heavy petroleum feedstock hydrocracking process from a spent carbon additive to obtain a spent carbon additive and a purified unconverted residue of a heavy petroleum feedstock hydrocracking. The technical effect resides in increasing the efficiency of separation of the spent carbon additive from the mixture of the unconverted residue with the solvent, ensuring stable equipment operation with a specified performance and preventing the clogging of equipment by deposits, thus avoiding long-term equipment downtime and labor-intensive work required to clean deposits from the equipment.

## Description

### TECHNICAL FIELD

The invention relates to the field of petroleum processing, specifically to a method for processing heavy petroleum feedstock. The method enables the production of valuable products from heavy residues of petroleum processing. Particularly, the invention relates to a method for hydrocracking heavy petroleum feedstock, comprising separating solid additives from unconverted hydrocracking residues, followed by their drying.

### BACKGROUND

In the state of the art there are many known processes for processing heavy hydrocarbons in the presence of special solid additives (adsorbents, catalysts, etc.), such as VCC, Uniflex, EST, GT-SACT, H-Oil, LC-Fining, etc. Among these, the most effective process for processing heavy petroleum feedstocks, e.g. such as tar obtained from fractional distillation of heavy Urals crude oil, is a combined hydrocracking process. Solid additives, having adsorbed asphaltenes and their compaction products (carbenes and carboids), should be extracted from unconverted residues to ensure the subsequent separate processing of the spent solid additive and the unconverted residues to produce in-demand products.

The process of separating unconverted residues and solid additives is often complicated by concentrating and forming a large number of asphaltenes and their higher molecular weight derivatives, carbenes and carboids, in heavy residues from hydrocracking processes (heavy bottom products of high-pressure separators). This leads to increased colloidal and aggregative instability, as well as viscosity and density of the residues. A mixture of solid additives (catalysts, adsorbents, etc.) and asphaltenes is prone to form highly viscous compounds. These compounds, during long-term storage at temperatures below 80°C, can cake and transform into various types of coke deposits. In such scenarios, chemical aging and further precipitation of heavy hydrocarbons occurs.

As a result, the highly increased concentration of mechanical impurities and hydrocarbon sediments in heavy unconverted residues from hydrogenation processes impedes the further processing of residual hydrocracking products into commercial products (fuel oil, sintering additive, bitumen products, etc.). Moreover, the transportation and storage of these residuals lead to the clogging of process equipment (pipes, heat-exchangers, pumping equipment, valves, gate valves, etc.). Such clogging of equipment in industrial processes results in long-term equipment downtime and labor-intensive efforts required to clean deposits from the equipment.

The term "hydrocarbon sediments" as used herein refers to a mixture of high molecular weight resins and heavy hydrocarbons. This mixture mainly consists of asphaltenes, carbenes and carboids, which, according to the principles of colloidal chemistry, have low aggregative and colloidal stability and are prone to precipitation into a separate phase when external parameters (temperature, pressure, etc.) are changed.

The quality requirements for marine fuels are described in ISO 8217. Very stringent requirements for aging residue are specified in ISO 10307-2 (also known as IP390), which must be less than or equal to 0.1%.

Requirements for the quality of bitumen products are prescribed in GOST 33133-2014. According to GOST 33133-2014, solubility in toluene is also very important, in addition to physicochemical properties. The solubility characterizes the content of toluene-insoluble mechanical impurities and compaction products of asphaltenes (carbenes and carboids) in bitumen products and must be at least 99% by weight.

Patent RU 2678764 C2 describes a process for converting petroleum feedstock comprising a fluidized-bed hydrocracking stage, aging stage, and stage of separating sediments for production of fuel oils with low sediment content. The disadvantages of this solution are: a) the necessity of an aging stage and its prolonged duration required to settle the heavy fraction obtained after the stage of separating hydrocracking products; and b) a vague and overly broad description of the stage of separating sediments from the heavy fraction, which fails to provide a clear solution for the issue of asphaltene agglomeration induced by the use of solvents and aliphatic diluents.

Patent RU 2337938 C1 discloses a method for separating hydrocarbons from a solid source, which faces significant limitations due to the use of water for mixing with bitumen rock. Firstly, bitumen may contain natural emulsifiers which lead to the formation of stable water-bitumen emulsions when mixed with water and under sufficiently intermixing (for example, by pumping equipment). Secondly, using water restricts heating the mixture above 100°C, thus reducing the efficiency of subsequent separation stages that rely on differences in densities and viscosities of the separated media. Thirdly, the separation methods suggested in the patent are ineffective for separating the smallest solid particles (less than 100 µm in size).

US2012/0048782 A1 patent document also discloses a multi-stage washing of bitumen sands using two solvents. However, unlike previous solutions, the method also includes a step of drying separated solids. It suggests using a hydrocarbon fraction with a boiling range of 36 to 110°C, consisting of hydrocarbons like pentane, hexane, cyclohexane, and heptane as a light solvent. When such paraffin-naphthenic solvents contact heavy unconverted residues from hydrocracking of residual stocks, which are highly viscous and dense (with a density at 15°C of more than 1100 kg/m³), contain high amounts of asphaltenes (up to 35-40 wt.%), and have high Conradson coking capacity (up to 35-40 wt.%), asphaltenes will surely precipitate. This will result in the clogging of equipment due to formation of substantial coke-like sediment. A significant reduction in the efficiency of this method when applied to the residual products of hydrocracking of residual feedstock is contributed by excessively low mixing temperatures of bitumen sand with solvents (20-80°C). Therefore, the methods of US2012/0048782 A1 are not well-suited for residues from secondary, advanced petroleum processing.

In addition, patent RU 2541324 C2 discloses a hydroconversion process for heavy feedstocks by using an additive to scavenge catalytically active metals and other metals comprised in the feedstock and to concentrate them in a heavy stream or unconverted residual material that exists the process reactor. The patent also describes a process for separating the additive from the unconverted residue of the hydroconversion process using a centrifuge. The processes are described in this document with reference to laboratory tests. However, scalability these process for industrial production may face challenges, including the clogging of equipment by asphaltene deposits. These could lead to reduced stability in equipment operation and decreased efficiency in purifying the unconverted residue from the additive.

Thus, the problem addressed by the present invention is the development of a system and a method for separating solid additives from the unconverted residues of the slurry-phase hydrocracking of heavy petroleum feedstocks, followed by their drying, ensuring stable operation of the equipment with a specified productivity and preventing the clogging of equipment by deposits.

Another problem addressed by the present invention is the development of an effective and stable method for hydrocracking heavy petroleum feedstocks, such as Urals heavy crude oil, which comprises separating solid additives from unconverted hydrocracking residues, followed by their drying, and allows for the production of in-demand products (sintering additive, bitumen products, etc.) from the residues formed during such processing and the spent additive with asphaltenes and metals adsorbed on it in the form of porphyrin complexes, which can then be used as solid fuel for combustion, metal extraction, or as a charge for the metallurgical industry.

### SUMMARY OF THE INVENTION

The present invention is aimed at solving at least some of the problems mentioned above.

In accordance with the first aspect of the present invention, a unit is proposed for separating a spent additive from an unconverted residue of heavy petroleum feedstock hydrocracking process (hereinafter also referred to as a spent additive separation unit), comprising three successively positioned sections, each comprising a mixing tank, a pump, and a separation tank, wherein
a mixing tank of a first section is configured to mix a slurry stream, which comprises a carbon additive and the unconverted residue of heavy petroleum feedstock hydrocracking process, with a solvent, a recycle stream from a separation tank of the first section, and a recycle stream from a separation tank of a second section to reduce the viscosity and concentration of the slurry; a pump is configured to supply a slurry mixture from the mixing tank to a hydrocyclone in the separation tank, which is configured to separate the slurry mixture and direct an upper stream from the hydrocyclone partially back to the mixing tank of the first section and partially to a buffer tank of a unit for solvent regeneration and fractionation of purified petroleum products, as well as to direct a lower stream from the hydrocyclone to an internal space of the separation tank and further to a mixing tank of the second section;
the mixing tank of the second section is configured to mix the stream from the separation tank of the first section with a recycle stream from a separation tank of a third section; a pump of the second section is configured to supply a slurry mixture from the mixing tank of the second section to a hydrocyclone installed in the separation tank of the second section, which is configured to separate the slurry mixture, to recycle an upper stream from the hydrocyclone to the mixing tank of the first section and direct a lower stream from the hydrocyclone to an internal space of the separation tank and further to a mixing tank of the third section;
the mixing tank of the third section is configured to mix the stream from the separation tank of the second section with the solvent from the unit for solvent regeneration and fractionation of purified petroleum products; a pump of the third section is configured to supply a slurry mixture from the mixing tank of the third section to a hydrocyclone in the separation tank of the third section, which is configured to separate the slurry mixture and direct an upper stream from the hydrocyclone to the mixing tank of the second section, as well as to direct a lower stream from the hydrocyclone to an internal space of the separation tank and further to a drum dryer of a unit for drying a spent additive (hereinafter also referred to as a spent additive drying unit);
wherein the upper stream from each hydrocyclone includes a mixture of the unconverted residue and the solvent, and the lower stream from each hydrocyclone includes a wet spent carbon additive.

According to one embodiment of the spent additive separation unit, an upper fitting of the hydrocyclone is directly connected to an upper fitting of the separation tank.

In another embodiment of the spent additive recovery unit, the solvent is an aromatic light catalytic-cracking gas oil and/or a regenerated solvent from the unit for solvent regeneration and fractionation of purified petroleum products.

In another embodiment of the spent additive separation unit, a gas cushion is provided in an upper part of the separation tank to control a fluid level in the tank and regulate drainage from the tank.

In another embodiment of the spent additive separation unit, a solvent supply pipeline and recycle stream supply pipelines from the separation tank of the first section and the separation tank of the second section are connected to a supply pipeline for slurry stream comprising the carbon additive and the unconverted residue of heavy petroleum feedstock hydrocracking process, before the mixing tank of the first section, thereby enabling pre-mixing of the streams.

In another embodiment of the spent additive separation unit, the mixing tank includes a two-valve system, wherein one valve is configured to supply natural gas to the tank, and the other valve is configured to relieve excess pressure in order to control the pressure in the tank.

In another embodiment of the spent additive separation unit, the flow rate of the lower stream from the separation tank to the mixing tank is controlled by a valve.

In yet another embodiment of the spent additive separation unit, in pipeline sections from the separation tanks to the mixing tanks, valves are mounted at a minimum distance beneath the separation tanks.

In another embodiment of the spent additive separation unit, two pneumatic vibrators are installed on valve assemblies beneath the separation tanks, wherein one pneumatic vibrator is positioned before the valve, and the other is positioned after the valve.

In another embodiment of the spent additive separation unit, the mixing tank of the second section is configured to mix the stream from the separation tank of the first section with the recycle stream from the separation tank of the third section and with a stream from a hydrocyclone apparatus of the unit for solvent regeneration and fractionation of purified petroleum products.

In another embodiment of the spent additive separation unit, the mixing tank in the third section is configured to mix the stream from the separation tank of the second section with the solvent from the unit for solvent regeneration and fractionation of purified petroleum products, and with the stream from the hydrocyclone apparatus of the unit for solvent regeneration and fractionation of purified petroleum products.

In accordance with the second aspect of the present invention, a unit is proposed for drying a spent carbon additive separated from a slurry of the carbon additive and an unconverted residue of heavy petroleum feedstock hydrocracking process. This unit includes a drum dryer, a drum cooler and a crusher, wherein
the drum dryer is configured to evaporate liquid hydrocarbons, including a solvent, from a wet spent carbon additive received from a spent additive separation unit, and supply them, after condensation, to a buffer tank of a unit for solvent regeneration and fractionation of purified petroleum products, and to discharge particles of the dry spent additive into the drum cooler configured to cool the spent carbon additive before for feeding it into a crusher, where the cooled spent carbon additive is crushed. Additionally, in an exhaust gas pipeline running from the drum dryer, which is configured to remove gases from the drum dryer, including evaporated hydrocarbons and steam, a mechanical device is installed which is configured to remove sediments of dust-like particles of the spent carbon additive adhering to the wall.

In another embodiment of the spent carbon additive drying unit, the mechanical device is an electrically driven pusher.

In another embodiment of the spent carbon additive drying unit, the pusher is equipped with cutters.

In another embodiment of the spent carbon additive drying unit, a condensate drain pipeline is provided in the exhaust gas pipeline, and into the condensate drain pipeline, a low-pressure steam is supplied through a nozzle.

In another embodiment of the spent carbon additive drying unit, in the exhaust gas pipeline, there is provided the supply of a superheated steam.

In accordance with the third aspect of the present invention, a unit is proposed for solvent regeneration and fractionation of purified petroleum products. The unit includes a buffer tank for storing feedstock to be fed to a vacuum column, a vacuum column pump for feedstock, a hydrocyclone apparatus for additional purification of a stream of spent carbon additive particles, a heater and a vacuum column for separating a solvent and a heavy unconverted residue of heavy petroleum feedstock hydrocracking process, wherein
the buffer tank is configured to receive and collect a stream mixture of the unconverted hydrocracking residue and a solvent from a separation tank of a spent additive separation unit, and a stream, which is a condensate of hydrocarbon vapors discharged from a drum dryer of a spent additive drying unit;
the vacuum column pump for feedstock is configured to supply the feedstock from the buffer tank to the hydrocyclone apparatus, where the feedstock is purified, and
the hydrocyclone apparatus is configured to direct a lower stream including a slurry of the spent carbon additive particles to a mixing tank of a second section and/or to a mixing tank of a third section of the spent additive separation unit, and to direct an upper stream of the hydrocyclone apparatus, including a purified product, for heating to the heater and further to the vacuum column;
wherein the vacuum column is configured to produce a regenerated solvent to be directed to the unit for separating the spent additive and bottoms of the vacuum column, which are unconverted residues of heavy petroleum feedstock hydrocracking process purified from the spent carbon additive.

In one embodiment of the unit for solvent regeneration and fractionation of purified petroleum products, the hydrocyclone apparatus is a battery hydrocyclone apparatus that includes several hydrocyclones, wherein each of the hydrocyclones can be individually put off or into operation to regulate the productivity and efficiency of the unit.

In accordance with the fourth aspect of the present invention, a system is proposed for purifying an unconverted residue of heavy petroleum feedstock hydrocracking process from a spent carbon additive, the system comprising the spent additive separation unit, the spent additive drying unit, the unit for solvent regeneration and fractionation of purified petroleum products.

In accordance with the fifth aspect of the present invention, a method is proposed for purifying an unconverted residue of heavy petroleum feedstock hydrocracking process from a spent carbon additive, performed using the system for purifying the unconverted residue of heavy petroleum feedstock hydrocracking process from the spent carbon additive. The method comprises steps of: supplying a slurry comprising a carbon additive and the unconverted residue of heavy petroleum feedstock hydrocracking process, and a solvent to the spent additive separation unit; delivering a wet spent carbon additive from the spent additive separation unit to the spent additive drying unit; evaporating the solvent from the wet spent carbon additive in the spent additive drying unit, cooling and crushing the dry spent carbon additive; removing the mixture of the unconverted hydrocracking residue and the solvent from the spent additive separation unit, and a solvent vapor condensate from the spent additive drying unit and supplying them to the unit for solvent regeneration and fractionation of purified petroleum products; and producing, in the unit for solvent regeneration and fractionation of purified petroleum products, a regenerated solvent, which is delivered to the spent additive separation unit, and a purified unconverted residue of heavy petroleum feedstock hydrocracking process.

In accordance with the sixth aspect of the present invention, a method is proposed for processing heavy petroleum feedstock. The method comprises the steps of: slurry-phase hydrocracking (SPH) of feedstock comprising a heavy petroleum feedstock and a carbon additive, followed by separation into an SPH-subjected feedstock stream and a heavy residue stream, wherein the heavy residue stream is a slurry of an unconverted high-boiling residue and a spent carbon additive; hydrocracking the feedstock hydrocracking products obtained in the SPH step, in a gas phase with a fixed bed catalyst, followed by the fractionation of resulting hydrocracking products; performing the method for purifying an unconverted residue of heavy petroleum feedstock hydrocracking process from a spent carbon additive to obtain the spent carbon additive and a purified unconverted residue of heavy petroleum feedstock hydrocracking process.

### BRIEF DESCRIPTION OF DRAWINGS

The invention will be further explained by describing preferred embodiments of the invention with reference to the accompanying drawings, wherein:
Fig. 1 is a flow diagram of a method for processing heavy petroleum feedstock according to the present invention;
Fig. 2 schematically shows a system for purifying an unconverted hydrocracking residue from a carbon additive in accordance with the present invention;
Fig. 3 schematically shows a spent additive separation unit in accordance with the present invention;
Fig. 4 schematically shows a spent additive drying unit after the spent additive separation unit in accordance with the present invention;
Fig. 5 schematically shows a unit for solvent regeneration and fractionation of purified petroleum products in accordance with the present invention;
Fig. 6 is a cross-sectional view of a thin-film evaporator casing;
Fig. 7 is a general view of a feedstock distributor of the thin-film evaporator;
Fig. 8 shows a general view of a rotor with installed scrapers in the thin-film evaporator;
Fig. 9 shows a feedstock redistributor.

### DETAILED DESCRIPTION OF THE INVENTION

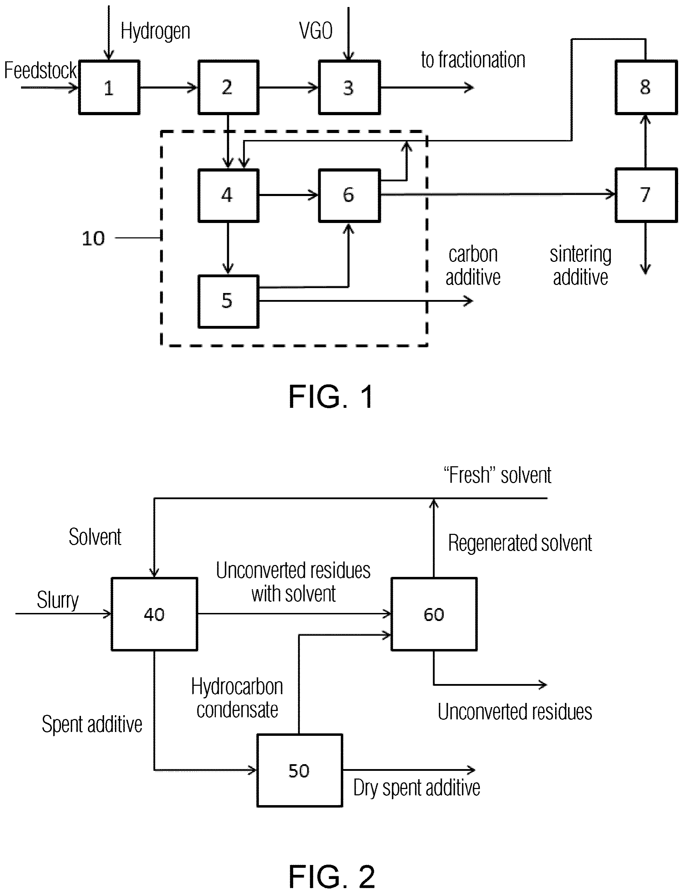

Fig. 1 shows a flow diagram of the method for processing heavy petroleum feedstock according to the present invention.

Feedstock for the method for processing heavy petroleum feedstock is a slurry of the heavy petroleum feedstock and a carbon additive, which is typically added in an amount of 1 to 2% by weight of the heavy petroleum feedstock, are fed into a slurry-phase hydrocracking (SPH) reactor in SPH step (1) (see Fig.1). Special cases of heavy petroleum feedstocks include tar, atmospheric column bottoms, vacuum column bottoms, heavy recycle gas oil, shale oils, liquid fuels from coal, crude oil bottoms, reduced cruds, and heavy bituminous oils.

A hydrogen-containing gas, in particular hydrogen is used in the SPH step (1) and is supplied to a pre-formed slurry of heavy feedstock, in particular tar, and a carbon additive used for the adsorption of heavy hydrocarbons, such as asphaltenes.

The additive according to an exemplary embodiment comprises a porous carbon material of two different granulometric compositions, such as a coarse fraction and a fine fraction, wherein the particle diameter of the fine fraction is 0.063 to 0.4 mm, and the particle diameter of the coarse fraction is 0.4 to 1.2 mm. Given that the SPH process can be carried out in one or more reactors, the size of the additive depends on the reactor productivity and the number of reactors in the first SPH step - the lower the productivity, the smaller the number and volume of reactors and the smaller the additive particles are. Carbon materials that can be used to produce carbon additives for combined hydrocracking are known in the art. They include, for example, lignite, activated brown and long-flame coal. Activated coals modified with metal salts (Fe, Mo, Ni and the like) also can be used as a carbon additive.

In this case, it is necessary that the activated carbon additive be characterized by the following porosity indicators:
- Specific surface of at least 230 m²/g;
- BJH total pore volume of at least 0.25 cm³/g; and
- BJH mesopore volume of at least 0.125 cm³/g.

In the SPH step (1), hydrocarbons are decomposed and saturated in a hydrogen environment, with asphaltenes, as well as metals such as Ni, V, etc., which are catalytic poisons for gas-phase hydrocracking, being adsorbed on the carbon additive.

About 95% of hydrocarbons are converted into a gaseous partially hydrogenated hydrocarbon mixture comprising lighter hydrocarbon components, such as C₁, C₂, C₃, C₄, C₅ hydrocarbons, naphtha, diesel fraction, and vacuum gas oil, as well as H₂S, NH₃, and H₂O.

The remaining substances in an amount of approximately 5% are a slurry consisting of the mentioned carbon additive with adsorbed asphaltenes and metals, and an unconverted high-boiling residue, which is a mixture of predominantly high-boiling hydrocarbons with an initial boiling point exceeding 525°C. For the purposes of the present specification, the carbon additive from step 1, where asphaltenes and metals have been adsorbed, will be referred to as a "spent carbon additive".

The products obtained in step 1 (SPH) are separated in separation step 2 into gaseous products and a slurry of an unconverted high-boiling residue and a spent carbon additive. The separation section is located between the SPH and gas-phase hydrocracking sections.

Gaseous products are delivered to step 3 of the gas-phase hydrocracking with a fixed bed catalyst, followed by fractionation of the resulting product stream to obtain light oil products. Vacuum gas oil (VGO) is also supplied to this step.

The slurry of the unconverted high-boiling residue and the spent carbon additive enters separation step (4) in a system (10) for purifying the unconverted residue of heavy petroleum feedstock hydrocracking process from the spent carbon additive.

Preferably, the additive is characterized by a sufficiently high volume of mesopores (more than 25% of the total pore volume), i.e., a pore size exceeding 10 nm, to achieve a more efficient adsorption of asphaltenes.

A developed specific surface area (at least 230 m²/g), practically when provided by a large number of mesopores, further contributes to an extensive "liquid-solid" phase boundary where cracking reactions occur. Moreover, a more developed surface facilitates the entry of asphaltenes into the pores while minimizing the risk of them "escaping" due to the complex pore geometry, i.e., they act as a kind of pore "lock" for asphaltenes.

However, not all asphaltenes of the feedstock, including carbenes and carboids formed from secondary condensation/polymerization reactions during hydrocracking, are adsorbed by the carbon additive. Approximately 10 wt.% of these substances remain as a dispersed phase surrounded by a dispersion medium, which leads to an imbalance between asphaltenes and, on the one hand, aromatic hydrocarbons that disperse asphaltenes and, on the other hand, saturated hydrocarbons that contribute to the precipitation of asphaltenes. Consequently, this unconverted high-boiling residue becomes aggregatively unstable, resulting in delamination (splitting) and the formation of challenging deposits in the form of asphaltene sediments. These deposits adversely impact the equipment operation, causing wear, shutdowns, and complications in cleaning and replacing equipment susceptible to such deposits.

In this regard, it would be desirable to increase the content of aromatic hydrocarbons in the dispersion medium, thereby preventing the precipitation of those asphaltenes which have not been adsorbed by the additive.

In addition, the unconverted high-boiling residue is a fairly viscous liquid, and its flow can entrain the spent carbon additive, together with adsorbed asphaltenes and metals, to further processing. Therefore, it is necessary to effectively reduce the viscosity of the unconverted high-boiling residue in order to separate it from the spent carbon additive. Effective reduction of viscosity means herein the creation of a viscosity and density gradient between the unconverted residue and the spent carbon additive so that the created gradient facilitates the separation of the spent additive. Considering these factors, an aromatic solvent free of paraffins, which are natural precipitants of asphaltenes, is suitable to reduce the viscosity, while preventing delamination.

The above specified challenge of separating the spent carbon additive from the unconverted residue of heavy petroleum feedstock hydrocracking process is addressed in the present invention by providing a system (10) for purifying an unconverted residue of heavy petroleum feedstock hydrocracking process from a spent carbon additive. The system comprises a spent additive separation unit (40), where step (4) of separating the unconverted hydrocracking residue and the spent additive is performed, a spent additive drying unit (50), where step (5) of drying the spent additive is performed, and a unit (60) for solvent regeneration and fractionation of purified petroleum products, where step (6) of regenerating a solvent and fractionating the unconverted hydrocracking residue is performed.

Further, the system (10) for purifying an unconverted residue of heavy petroleum feedstock hydrocracking process from a spent carbon additive will be described in more detail with reference to Fig. 2.

The process of separating the spent carbon additive from the unconverted high-boiling residue is performed in the separation step (4), where the additive is washed with a solvent in the spent additive separation unit (40).

In general, the unit for separating a spent additive from an unconverted residue of heavy petroleum feedstock hydrocracking process (also referred herein as "spent additive separation unit") includes several successively located sections. Each section includes a mixing tank, a pump, and a separation tank.

The number of sections in the spent additive separation unit is selected depending on a desired productivity, a required efficiency of the spent additive separation, and the quality of initial slurry, and varies from 2 to 7.

A mixing tank of a first section is configured to mix a slurry stream, which comprises a carbon additive and an unconverted residue of heavy petroleum feedstock hydrocracking process, with a solvent, a recycle stream from a separation tank of the first section and a recycle stream from a separation tank of a subsequent section to reduce the viscosity and concentration of the slurry. A pump is configured to supply a slurry mixture from the mixing tank to a hydrocyclone in the separation tank, which is configured to separate the slurry mixture and direct an upper stream from the hydrocyclone partially back to the mixing tank of the first section and partially to a buffer tank of a unit for solvent regeneration and fractionation of purified petroleum products, as well as to direct a lower stream from the hydrocyclone to an internal space of the separation tank and further to a mixing tank of the subsequent section with a similar operating principle. The upper stream from each hydrocyclone includes a mixture of the unconverted residue with the solvent, and the lower stream from each hydrocyclone includes a wet spent carbon additive.

In a final section in the spent additive separation unit, a mixing tank is configured to mix the stream coming from the separation tank of the previous section with the solvent and, optionally, with a slurry stream coming from a battery hydrocyclone apparatus of the unit for solvent regeneration and fractionation of purified petroleum products; a pump is configured to supply a slurry mixture from the mixing tank to the hydrocyclone in the separation tank, which is configured to separate the slurry mixture and recycle an upper stream from the hydrocyclone to the mixing tank of the previous section, as well as to direct a lower stream from the hydrocyclone to an internal space of the separation tank and further to a drum dryer of a spent additive drying unit.

If the spent additive separation unit includes at least three sections, then each of the middle (intermediate) sections also comprises a mixing tank, a pump and a separation tank, wherein the mixing tank of this section is configured to mix the stream coming from the separation tank of the previous section with the recycle stream from the separation tank of the subsequent section and, optionally, with the slurry stream coming from the battery hydrocyclone apparatus of the unit for solvent regeneration and fractionation of purified petroleum products; the pump is configured to supply a slurry mixture from the mixing tank to the hydrocyclone in the separation tank, which is configured to separate the slurry mixture and recycle the upper stream from the hydrocyclone to the mixing tank of the previous section, as well as to direct the lower stream from the hydrocyclone to an internal space of the separation tank and further to the mixing tank of a subsequent identical intermediate section or final section.

The solvent supplied to the spent additive separation unit includes a "fresh" solvent fed from outside the system (10) for purifying an unconverted residue of heavy petroleum feedstock hydrocracking process from a spent carbon additive, and a regenerated solvent from the unit for solvent regeneration and fractionation of purified petroleum products.

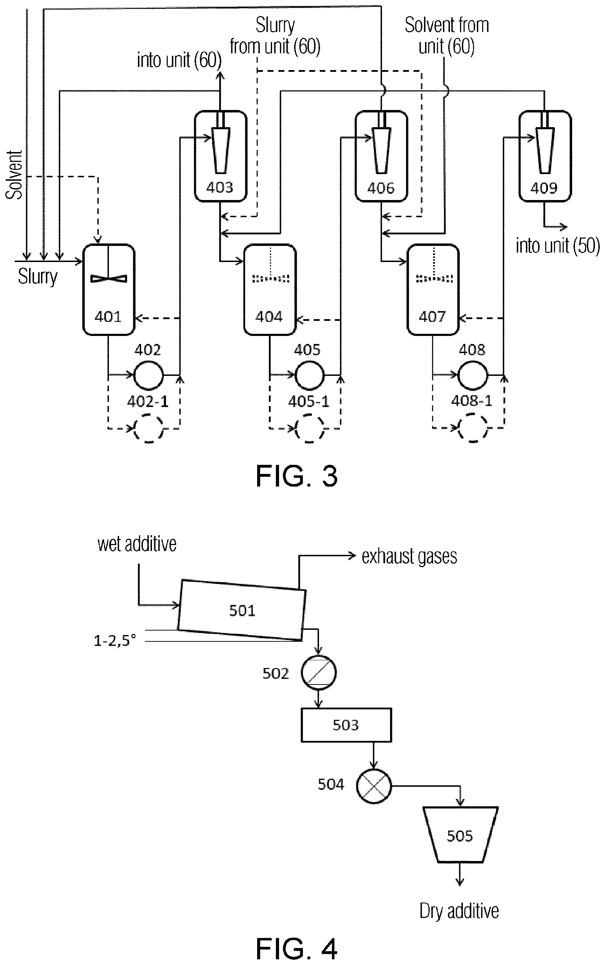

In a preferred embodiment of the present invention, the spent additive recovery unit (40) (see Fig. 3) includes three sections, each comprising a mixing tank, a pump, and a separating tank.

In the mixing tank (401) of the first section, a slurry stream of a carbon additive and an unconverted residue of heavy petroleum feedstock hydrocracking process, which has a temperature of 310-420°C, a pressure of 1.05-1.15 MPa (gauge) and a flow rate of 18-33 t/h, is mixed using a stirrer with a solvent stream, which has a flow rate of 7-10 t/h, a temperature of 250-260°C and a pressure of 0.8-1.0 MPa (gauge), a liquid-phase recycle stream comprising the solvent from the separation tank (403) of the first section, which has a flow rate of 5-15 t/h, a temperature of 280-300°C and a pressure of about 0.36-0.46 MPa (gauge), and a liquid-phase recycle stream comprising the solvent from the separation tank (406) of the second section, which has a flow rate of 50-70 t/h, a temperature of 250-270°C and a pressure of 0.28-0.35 MPa (gauge). Thus, the inlet of the mixing tank (401) of the first section connects with a pipeline for supplying the slurry stream of the carbon additive and the unconverted residue of heavy petroleum feedstock hydrocracking process, a solvent supply pipeline, the upper outlet of the separation tank (403) of the first section and the upper outlet of the separation tank (406) of the second section. The solvent supplied to the mixing tank (401) of the first section is a "fresh" solvent fed from outside the system (10) for purifying an unconverted residue of heavy petroleum feedstock hydrocracking process from a spent carbon additive (for example, after step (8) described below) and/or a regenerated solvent from the vacuum column (605) of the unit (60) for solvent regeneration and fractionation of purified petroleum products. The solvent addition reduces the viscosity and density of the slurry in the first section, thus increasing the efficiency of further separation of the spent carbon additive from the mixture of the unconverted high-boiling residue with the solvent. The solvent supply pipeline and recycle stream supply pipelines from the separation tanks of the first and second sections are connected to the pipeline for supplying the slurry stream of the carbon additive and the unconverted residue of heavy petroleum feedstock hydrocracking process before the mixing tank of the first section so that the solvent and recycle stream are added to said slurry stream in the pipeline before the mixing tank (401), thus enabling pre-mixing of the streams. Optionally, the solvent and/or recycle streams may be fed directly to the mixing tank (401). In a preferred embodiment, the mixing tank (401) of the first section is a vertical cylindrical apparatus with a conical bottom. A fuel gas cushion is provided in an upper part of the mixing tank (401) to regulate the pressure level in the tank to reduce evaporation of the valuable solvent. The temperature in the mixing tank (401) is maintained in the range between 300 to 310°C and the pressure is kept at a level of 0.21 to 0.22 MPa (gauge). Released low-pressure hydrocarbon gases are freely delivered from the upper part of the mixing tank (401) to flare through drainage tanks. The outlet of the mixing tank (401) is connected to the inlet of the hydrocyclone in the separation tank (403) of the first section, wherein between the outlet of the mixing tank (401) and the inlet of said hydrocyclone there is installed a pump (402). The slurry mixture with a temperature of 280-300°C and a pressure of 0.8-1.1 MPa (gauge), is fed by the pump (402) from the mixing tank (401) to the hydrocyclone installed in the separation tank (403) of the first section. Optionally, a portion of the slurry mixture can be recycled to the mixing tank (401) using the pump (402) to enhance mixing through such circulation.

In the separation tank (403), which is a vertical cylindrical apparatus with a conical bottom, the spent carbon additive is separated from the mixture of the unconverted high-boiling residue with the solvent through the hydrocyclone operation. In an upper part of the separation tank (403), a gas cushion is provided to control the fluid level in the tank and to regulate drainage from the tank. Increasing the gas cushion pressure, if necessary, allows the spent carbon additive to be pushed further downstream, thus reducing the risk of equipment clogging.

A hydrocyclone generally consists of a short cylindrical (upper) part with a pipe for tangential introduction of pulp (tangential to the surface of the cylinder) and a conical (bottom) part with a hole at the top of the cone for discharging solid fractions.

The tangential introduction of initial pulp and axial discharging of the separation products lead to the pulp rotation, the axial and radial movement of the pulp from the walls of the apparatus to the drain and discharging holes. The rotating stream in the hydrocyclone has several zones: external (wall) - downward; internal - upward; middle - circulation that occupies the main volume of the hydrocyclone. Heavier and larger solid particles arriving with the initial pulp are thrown by the centrifugal force onto the inner surface of the cylinder and carried down by the rotating downward stream. Light and fine particles are carried into the inner zone under the influence of the stream radial component (from the walls to the center) and due to the turbulent nature of its movement. A part of the downward wall vortex stream in the bottom zone of the cone turns upward, forming a drain. The hydrocyclone comprises no moving elements, which increases its reliability, while ensuring high efficiency in separating heavier and lighter fractions.

An upper fitting of the hydrocyclone for removing the purified stream in the present technical solution is connected directly to an upper fitting of the separation tank (403), due to which the upper and lower streams of the hydrocyclone do not mix with each other inside the tank (403), thereby increasing the separation efficiency.

The separation tank (403) of the first section is placed directly above the mixing tank (404) of the second section to allow the underflow of the separation tank (403) to gravity flow into the mixing tank (404) of the second section. Moreover, to reduce the risk of clogging the pipeline by asphaltene deposits, the mixing tank (404) of the second section is placed at a minimum possible distance from the separation tank (403) of the first section.

The upper outlet of the separation tank (403) is connected to the inlet of the mixing tank (401) of the first section to supply a recycle stream comprising the solvent and the unconverted residue, and to the inlet of the buffer tank (601) of the unit (60) for solvent regeneration and fractionation of purified petroleum products. The lower outlet of the separation tank (403) is connected to the inlet of the mixing tank (404) of the second section. The slurry mixture from the pump (402), entering the separation tank (403), is separated in the hydrocyclone into a light upper stream and a heavier lower stream. The light upper stream, predominantly liquid phase, comprising the solvent and the unconverted residue, is partially recycled to the mixing tank (401) of the first section at a flow rate of 5-15 t/h and partially sent to the buffer tank (601) of the unit (60) for solvent regeneration and fractionation of purified petroleum products at a flow rate of 40-60 t/h and a pressure of 0.36-0.45 MPa (gauge), for subsequent regeneration of the solvent, bypassing an internal space of the separation tank (403) since the upper outlet of the hydrocyclone is directly connected with the upper outlet of the separation tank (403).

The stream of the unconverted residue and the solvent is supplied by pumps (602) from the buffer tank (601) to the battery hydrocyclone apparatus (603) for further purification, and the purified stream is then fed to the vacuum column (605) to be separated into the solvent and the heavy unconverted residue. The separated solvent is recycled to the spent additive recovery unit (40) (for example, to the mixing tank (401) of the first section and/or the mixing tank (407) of the third section). This process will be described in detail below when describing the unit (60) for solvent regeneration and fractionation of purified petroleum products.

The heavier lower stream from the hydrocyclone, predominantly wet solid phase, comprising the spent carbon additive, is drained into the internal space of the separation tank (403) and then delivered by gravity to the mixing tank (404) of the second section at a flow rate of about 35-45 t/h. The flow rate of the heavy lower stream from the tank (403) to the tank (404) is controlled by valves.

The pressure difference between the upper and lower outlets of the hydrocyclone in the tank (403) should be maintained in the range of 0.04-0.07 MPa. The pressure in the separation tank (403) should be kept at a level of 0.3-0.4 MPa (gauge), and the temperature should be maintained at 285-295°C. This ensures the maintenance of the driving force for expelling the slurry from the separation tank. In the mixing tank, an excess pressure should be maintained to prevent the boiling of the light hydrocarbon fractions in the solvent. This is achieved by a two-valve system, where one valve is configured to supply natural gas to the tank, and the other valve is configured to relieve excess pressure. The operating pressure in the mixing tank should not exceed that in the separation tank of the previous section to prevent the gas cushion in the mixing tank from breaking through to the separation tank via the drain riser, which could disrupt the operation of the hydrocyclones installed inside the separation tanks.

Preferably, in the present invention, more efficient separation of the spent additive is achieved by using as a solvent an aromatic light gas oil from petroleum processing and petrochemical processes aimed at increasing the aromatic hydrocarbon content, especially through catalytic cracking, by raising the content of aromatic C8-C16 hydrocarbons to more than 80 wt.%. In a preferred embodiment of the present invention, the said solvent circulates from the unit (60) for solvent regeneration and fractionation of purified petroleum products to the spent additive separation unit (40). In normal operation mode, the solvent consumption is maintained at a constant level, while the supply of a makeup amount of solvent is provided from outside the system (10) to compensate for process losses.

This solvent effectively reduces the viscosity and density of the unconverted high-boiling residue and eliminates asphaltene precipitation, as it increases the aromatic fraction in the disperse system and lacks paraffins, which are natural precipitants of asphaltenes, thus avoiding equipment clogging. Therefore, the hydrocarbon type content provided in an aromatic light gas oil, comprising more than 80 wt.% aromatic hydrocarbons, enhances the separation of the carbon additive from the unconverted high-boiling residue.

This provides an additional advantage in that if a product obtained from the residue purified from the spent carbon additive is used as a sintering additive for carbon products, the ash content of such a sintering additive will be significantly reduced.

Light aromatic gas oil from petroleum processing is usually used to produce diesel fuels and, therefore, it is impractical and unprofitable to use it as a solvent. Consequently, to provide additional light aromatic gas oil, this invention proposes using heavy vacuum gas oil, produced by the method of the present invention, as described below. Utilizing this additional amount as a solvent in the separation step not only enhances the efficiency but also diminishes the resource intensity of the method. Therefore, the present invention provides an additional source of feedstock for light aromatic gas oil production, at least part of which is advantageously used as a solvent according to the present invention. The subsequent description of the method will elucidate the features of providing this feedstock source.

It should be noted that as the carbon additive more efficiently adsorbs asphaltenes, fewer asphaltenes remain in the unconverted high-boiling residue, and less aromatic solvent is required in step (4) of separating the unconverted hydrocracking residue and the spent additive. Furthermore, enhanced separation of the spent additive from the unconverted high-boiling residue in separation step (4) contributes to greater stability of the unconverted high-boiling residue in the oil dispersed system.

The inlet of the mixing tank (404) of the second section is connected to the lower outlet of the separation tank (403) in the first section, to the upper outlet of the separation tank (409) of the third section and, optionally, to the outlet of the hydrocyclone apparatus (603) of the unit (60) for solvent regeneration and fractionation of purified petroleum products. The wet solids stream entering the second section mixing tank (404) from the first section separation tank (403) is mixed with the liquid-phase recycle stream, which includes the solvent and the unconverted residue from the third section separation tank (409), and, optionally, with the slurry from the battery hydrocyclone apparatus (603). The design of this mixing tank may be similar to that of the mixing tank of the first section. Optionally, the mixing tank (404) can be equipped with a stirrer.

A fuel gas cushion is provided at an upper part of the mixing tank (404) to regulate the pressure level in the tank. Additionally, the temperature in the tank (404) is maintained in the range of 260-270°C, and a pressure is kept at a level of 0.195 to 0.205 MPa (gauge). From the upper part of the mixing tank (404), released low-pressure hydrocarbon gases are freely delivered through drainage tanks to flare. The outlet of the mixing tank (404) of the second section is connected to the inlet of the hydrocyclone in the separation tank (406) of the second section, with a pump (405) installed between the outlet of the mixing tank (404) and the inlet of the said hydrocyclone. The slurry mixture with a temperature of 250-270°C and a pressure of 0.8-1.1 MPa (gauge) is supplied from the mixing tank (404) by the pump (405) to the hydrocyclone in the separation tank (406) of the second section. Optionally, a portion of the slurry mixture can be recycled to the mixing tank (404) using pump (405) to enhance mixing through such circulation.

A gas cushion is provided at the upper part of the separation tank (406) to control the fluid level in the tank and to regulate drainage from the tank. Increasing the gas cushion pressure, if necessary, allows the spent carbon additive to be pushed further downstream, thus reducing the risk of equipment clogging.

The separation tank (406) of the second section is located directly above the mixing tank (407) of the third section, allowing the underflow of the separation tank (406) to gravity flow into the mixing tank (407) of the third section. Moreover, to reduce the risk of clogging the pipeline by asphaltene deposits, the mixing tank (407) of the third section is positioned at a minimum possible distance from the separation tank (406) of the second section.

The upper outlet of the separation tank (406) is connected to the inlet of the mixing tank (401) of the first section to supply the recycle stream comprising the solvent and the unconverted residue. The lower outlet of the separation tank (406) is connected to the inlet of the mixing tank (407) of the third section. The slurry mixture from the pump (405), upon entering the separation tank (406), is separated in the hydrocyclone into a light upper stream and a heavier lower stream. The light upper stream, comprising predominantly liquid phase, is recycled to the mixing tank (401) of the first section at a flow rate of 50-70 t/h and a pressure of 0.28-0.35 MPa (gauge), bypassing an internal space of the separation tank (406) since the upper outlet of the hydrocyclone is directly connected to the upper outlet of the separation tank (406).

The heavier lower stream from the hydrocyclone, predominantly wet solid phase, is drained into the internal space of the separation tank (406) and then delivered by gravity to the mixing tank (407) of the third section at a flow rate of about 35-45 t/h. The flow rate of the heavy lower stream from the tank (406) to the tank (407) is controlled by valves installed in the pipeline.

The pressure difference between the upper and lower outlets of the hydrocyclone in the tank (406) should be maintained within the range of 0.04-0.07 MPa. The pressure in the separation tank (406) should be kept at a level of 0.3-0.4 MPa (gauge).

The inlet of the mixing tank (407) of the third section is connected to the lower outlet of the separation tank (406) of the second section, the outlet of the vacuum column (605) of the unit (60) for solvent regeneration and fractionation of purified petroleum products, and, optionally, to the outlet of the hydrocyclone apparatus (603) of the unit (60) for solvent regeneration and fractionation of purified petroleum products. The wet solids stream entering the mixing tank (407) of the third section from the separation tank (406) of the second section is mixed with the solvent from the unit (60) for solvent regeneration and fractionation of purified petroleum products and, optionally, with the slurry stream from the battery hydrocyclone apparatus (603). The design of this mixing tank is similar to that of the mixing tank of the first section. Optionally, the mixing tank (407) can be equipped with a stirrer.

A fuel gas cushion is provided in an upper part of the mixing tank (407) to regulate the pressure level in the tank. The temperature in the tank (404) is maintained in the range of 250 to 260°C and the pressure is kept at the level of 0.195 to 0.205 MPa (gauge). From the upper part of the mixing tank (407), the released low-pressure hydrocarbon gases are freely delivered through drainage tanks to flare. The outlet of the mixing tank (407) is connected to the inlet of the hydrocyclone in the separation tank (409) of the third section, with a pump (408) installed between the outlet of the mixing tank (407) and the inlet of the said hydrocyclone. The slurry mixture with a temperature of 250-270°C and a pressure of 0.8-1.1 MPa (gauge), is supplied from the mixing tank (407) by a pump (408) to a hydrocyclone in the separation tank (409) of the third section. Optionally, a portion of the slurry mixture can be recycled to the mixing tank (407) using pump (408) to enhance mixing through such circulation.

The separation tank (409) is preferably located directly above the drum dryer (501) of the spent additive drying unit (50).

A gas cushion is provided in the separation tank (409) to control the fluid level in the tank and the drainage from the tank. Increasing the gas cushion pressure, if necessary, allows the spent carbon additive to be pushed further downstream, thus reducing the risk of equipment clogging.

The upper outlet of the separation tank (409) is connected to the inlet of the mixing tank (404) of the second section to supply the recycle stream comprising the solvent and the unconverted residue. The lower outlet of the separation tank (403) is connected to the inlet of the drum dryer (501) of the spent additive drying unit (50). The slurry mixture from the pump (408), upon entering the separation tank (409), is separated in the hydrocyclone into a light upper stream and a heavier lower stream. The light upper stream, predominantly liquid phase, is recycled to the mixing tank (404) of the second section at a flow rate of 50-70 t/h and a pressure of 0.2-0.4 MPa (gauge), bypassing an internal space of the separation tank because the upper outlet of the hydrocyclone is directly connected to the upper outlet of the separation tank.

The heavier lower stream from the hydrocyclone, predominantly wet solid phase, is drained into the internal space of the separation tank (409) and then delivered by gravity to the drum dryer (501) of the spent additive drying unit (50) at a flow rate of about 5-15 t/h. The flow rate of the heavy lower stream from the tank (409) to the drum dryer (501) is controlled by valves.

The pressure difference between the upper and lower outlets of the hydrocyclone in the tank (409) should be kept at a level of 0.04-0.07 MPa. The pressure in the separation tank (409) should be kept at the level of 0.25-0.27 MPa, and the temperature should be maintained at 220-260°C.

Thus, the operation of the spent carbon additive separation unit (40) comprises several slurry circulation circuits, which significantly increases the efficiency of separation of the spent carbon additive from the mixture of the unconverted high-boiling residue and the solvent by repeatedly passing the slurry through these circulation circuits:
- small circulation circuit: 401 → 402 → 403 → 401;
- middle circulation circuit: 401 → 402 → 403 → 404 → 405 → 406 → 401; and
- large circulation circuit: 401 → 402 → 403 → 404 → 405 → 406 → 407 → 408 → 409 → 404 → 405 → 406 → 401.

For the effective operation of hydrocyclones in the separation tanks (403, 406, 409), the following conditions must be fulfilled:
- a high consumption of pumped liquid;
- a high pressure difference between the top and bottom of the hydrocyclone (the top pressure should be greater than the bottom pressure); and
- low viscosity and density of the pumped liquid.

To eliminate the formation of stagnant zones in the separation tanks (403, 406, 409) and in pipeline sections from the separation tanks to the mixing tanks, valves are mounted at the bottom of the separation tanks as close as technologically possible to the tank bottoms. Additionally, the lengths of pipeline sections between shutoff valves, control valves and tanks should be minimized.

To prevent blockages and increase the efficiency of washing activated lignite, two pneumatic vibrators are installed on the valve assemblies beneath the separation tanks, wherein one pneumatic vibrator is installed before the valve, and the other is installed after the valve.

Each of the pumps (402, 405, 408) in the first to third sections may have a backup pump (402-1, 405-1, 408-1) connected in parallel. The presence of backup pumps allows for increased reliability of the entire apparatus and prevents the clogging of equipment by deposits in the event of any pump failure.

Thus, the spent additive separation unit (40) effectively separates the spent carbon additive from the mixture of the unconverted residue and the solvent, ensuring stable operation of the equipment with a specified performance. This also prevents the clogging of equipment by deposits, thereby avoiding long-term equipment downtime and labor-intensive efforts required to clean deposits from the equipment.

The number of sections in the unit (40) can be increased or decreased as required, depending on the quality indicators of the initial slurry: the higher the viscosity of the initial slurry and the higher content of the spent carbon additive therein, as well as the smaller the size of this spent carbon additive and the higher the content of asphaltenes, carbenes, and carboids, the more sections can be used.

The spent additive drying unit (50) in accordance with the present invention, includes a drum dryer (501), a valve (502), a drum cooler (503), a crusher (504), and a solids storage (505) (see Fig. 4).

Preferably, the drum dryer (501), the valve (502), the drum cooler (503), and the crusher (504) are arranged vertically above each other. Solid particles move between them due to gravitational forces.

The drum dryer (501) consists of a drum vessel equipped with an externally heated chamber. During the drying process, the wet residue may stick to the walls of the drum dryer. To prevent significant amounts of residue from sticking to the wall, an internal mechanical device, such as a scraper, is provided in the drum dryer to remove the sticky wet residue during rotation. The drum dryer is positioned at a slight incline relative to the horizontal plane, reducing the residence time of the dried spent additive inside the dryer to prevent cracking and coking. Additionally, the residence time of the slurry in the drum dryer is controlled by adjusting the rotation speed of the scraper or a similar internal device. The drum dryer is heated by burning a fuel (such as gas) in an outer chamber.

The remaining solvent in the solid phase is removed in the drum dryer (501) by indirectly heating the wet solid additive to a temperature of 460-560°C, using fuel gases from a burner and superheated low-pressure steam fed into the dryer, preheated to a temperature of 450-540°C by the heat of exhaust flue gases from the drum dryers.

The supplied superheated low-pressure steam reduces the partial pressure of hydrocarbons in the drum and prevents dust formation, while the solvent in the spent additive evaporates at lower temperatures.

The transportation and removal of residual hydrocarbons from the solid phase occur by adjusting the rotation speed of the dryers, while maintaining a given temperature inside the drum. In operating mode, the drum dryer operates at a speed of 1-4 rpm.

In operating mode, the drum dryer is filled with raw material to approximately 10-15%. In emergency situations, when the maximum filling of the drum dryer is more than 50%, its speed is increased to the maximum allowed parameter (10 rpm) to expedite discharging pitch coke.

Exhaust gases generated during the drying of the spent additive in the drum dryer, which comprise evaporated hydrocarbons, including the solvent and steam, and have a temperature of 350-500°C and a pressure of minus 1-5 kPa, are discharged from the drum dryer (501) into a Venturi mixer. In the mixer, they are mixed with a hydrocarbon mixture (solvent) supplied by the pump at a temperature of not more than 200°C. In the Venturi mixer, the solvent is sprayed through nozzles to capture entrained carbon dust particles. As a result, some of the steam is saturated with the solvent and condenses. The exhaust stream from the Venturi nozzle, with a temperature of not more than 240°C, is then supplied to the air cooler, where it is cooled to a range of 40-85°C. The resulting stream then enters the condensation tank for the dryer exhaust gas, where it is separated into steam and an aqueous phase sent for disposal, as well as hydrocarbons.

The resulting liquid hydrocarbons are pumped back to the Venturi mixer. A portion of the liquid hydrocarbons is sent to the buffer tank (601) of the unit for solvent regeneration and fractionation of purified petroleum products.

The speed of the exhaust gases, which trap fine dust, increases due to a large amount of hydrocarbon vapors generated with an increase in the supply of drying slurry to the drum dryer. Subsequently, the dust-gas stream partially condenses and sticks to the inner wall of the pipeline. This sticking leads to a narrowing of the throughput capacity of the exhaust gas pipeline, resulting in increasing the gas pressure in the drum dryer, which can lead to its failure.

To solve this problem, in the first horizontal section of the exhaust gas pipeline from the drum dryer, a mechanical device is installed inside the pipe, which prevents the pipe from clogging by dust-like fine particles of the spent additive by removing deposits of the spent carbon additive particles (carbon dust) adhering to the wall. This reduces the risk of blocking the flue gas line.

In addition, in the first horizontal section of the exhaust gas pipeline, a pipeline can be provided for discharging the condensate to a three-phase separator or to a special settling tank. To intensify the condensate removal from the horizontal section of the exhaust gas pipeline, low-pressure (LP) steam is supplied through a nozzle to the condensate drain pipeline.

Furthermore, to address the issue of the wet spent additive sticking to the pipeline walls when supplied to the drum dryers, superheated steam, instead of LP steam, can be used. The higher temperature of superheated steam prevents an increase in the viscosity, thereby reducing slurry adhesion inside the pipeline. To prevent the condensation of the dust-gas stream and deposition of fine dust, special devices for supplying the superheated steam can be installed at the outlet of exhaust gases from the drum dryers, creating a swirling stream.

In the drum dryer, the spent carbon additive mixed with the solvent is heated and held for some time. The residence time of the spent carbon additive in the drum dryer is set to ensure complete evaporation of the solvent. The dryer is installed at a slight angle (1-2.5°) and rotates slowly (1-4 rpm). This rotation gradually moves solids through the dryer and removes them from the dryer.

The solids stream with hydrocarbon residues is discharged from the drum dryer (501) through a dual valve (502) and fed into the drum cooler (503), where the spent carbon additive is cooled. Optionally, chains and steel balls can be installed inside the drum cooler to eliminate the risk of increasing particle size during the cooling procedure.

Further, the cooled spent carbon additive enters the crusher (504) and is crushed into fine particles. The fine particles must be sized and weighted appropriately for further pneumatic transportation. From the crusher, the spent carbon additive is transferred to a spent additive surge hopper, where the pressure is maintained between 0 to 1 kPa and the temperature between 15 to 85°C. From the surge hopper, the spent additive moves to the inlet of a rotary feeder, and further from the outlet of the rotary feeder, it enters a closed pneumatic transportation system, which delivers it to the solid particle storage (505). Here it can be discharged as a marketable product into a shipping container.

Thus, the spent carbon additive is removed from the process and can be used as a commercial product. The resulting spent carbon additive can be used in the form of solid fuel for combustion, metal extraction, or batch production for the metallurgical industry.

The spent additive drying unit (50), described above, effectively dries the spent carbon additive, ensures stable equipment operation at a specified performance level, and prevents the clogging of equipment, particularly the exhaust gas pipeline running from the drum dryer, by fine dust particles of the spent additive. This avoids long-term equipment downtime and labor-intensive work required to clean deposits from the equipment.

Thus, after passing through the spent additive separation unit (40), the spent carbon additive is removed from the process via the spent additive drying unit (50). Concurrently, the separated unconverted high-boiling residue mixed with the solvent enters the unit (60) for solvent regeneration and fractionation of purified petroleum products. In this unit, the solvent is separated from the extracted unconverted high-boiling residue, among other processes.

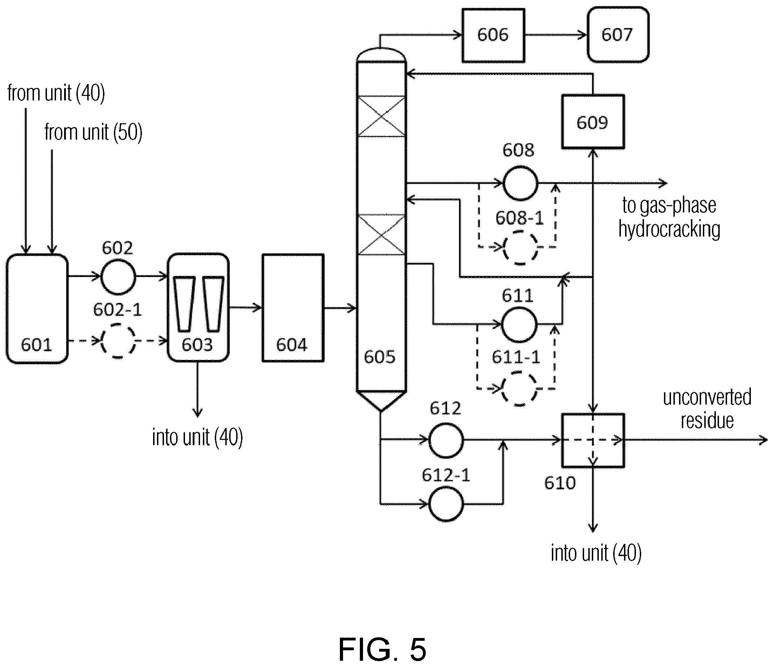

The unit (60) for solvent regeneration and fractionation of purified petroleum products (see Fig. 5) comprises a buffer tank (601) designed to create the necessary supply of feedstock to feed the vacuum column; a pump (602) for vacuum column feedstock; a hydrocyclone apparatus (603) for additional purification of the stream from the spent carbon dust particles, a heater (604), and a vacuum column (605) for separation of the solvent and the heavy unconverted residue.

The inlet of the buffer tank (601) is connected to the upper outlet of the separation tank (403) of the spent additive separation unit and to the outlet of the exhaust gas condensation tank of the dryer in the spent additive drying unit (50). The buffer tank (601) receives a petroleum emulsion stream of slurry feedstock from the separation tank (403) of the spent additive separation unit (40) and a hydrocarbon stream, which is the condensate of gases removed from the drum dryer (501) of the spent additive drying unit (50). The buffer tank (601) maintains a pressure between 0.3 and 0.4 MPa.

The feedstock from the buffer tank is supplied by the pump for vacuum column feedstock (602) to the hydrocyclone apparatus (603) for further purification of the stream from smaller particles of the spent carbon additive. The hydrocyclone apparatus (603) is a battery hydrocyclone apparatus and includes several hydrocyclones. Depending on changes in the load (fluid flow), some of the cyclones can be put off or into operation to regulate the performance of the apparatus (603). Electrical heating of the cyclones, collector, and lower product pipeline is provided to prevent the product from solidifying inside the hydrocyclone apparatus. The solidification of the product in the product supply and recycle pipelines is prevented by steam heating of the pipelines.

Instead of a hydrocyclone apparatus, another device (decanter, settling tank, or filter) can be used, depending on the physicochemical properties (density, viscosity, asphaltenes content, and coking capacity) of the hydrocarbon stream to be separated from the additive using the invention.

The slurry separated in the hydrocyclone apparatus (603) enters the mixing tank (404) and/or the mixing tank (407) of the spent additive separation unit (40). The purified product is mixed with a liquid stream from outside the system (10) for purifying an unconverted residue of heavy petroleum feedstock hydrocracking process from a spent carbon additive (particularly, from a cold LP liquid-phase separator). This mixture is delivered to the heater (604), where it is heated to a temperature not exceeding 385°C. The heated mixture enters the bottom part of the vacuum column (605) below a discharge lower "blind" tray. Additional purification of the vacuum column feedstock in the hydrocyclone apparatus significantly reduces the risk of clogging the furnace and vacuum column by deposits.

The vacuum column is designed to reduce the boiling points of the substances involved in the process and comprises trays (contact devices) to ensure a minimum pressure difference. The vacuum column (605) is a packed column (two beds: top and bottom), operating at a pressure range of 10 to 100 mmHg, preferably of 10 to 70 mmHg, and even more preferably of 10 to 30 mmHg. The upper part of the vacuum column is equipped with a tray with a gas duct ("semi-blind" tray), which serves as a boundary of the upper section (vacuum gas oil layer) of the packing column, and with a collection ("blind") tray. Above the collection tray there is a bottom packing bed and below there is a lower section comprising the main inlet to the column and a lower settling tank for bottoms. The temperature of the vacuum column cube is maintained within the range of 250-260°C.

Vapors of hydrocarbon gases with a temperature of not more than 80°C are directed for cooling from the upper part of the vacuum column (605) through a vapor pipe to the intertubular space of the cooler (606) at the top of the vacuum column. The top of the vacuum column in the tube space of the cooler (606) is cooled using circulating cooling return water. Condensed vapors of hydrocarbon gases (reflux) enter the reflux tank (607) of the vacuum column. In the reflux tank (607) of the vacuum column, separation of petroleum product, acid water, and waste gas takes place.

Vapors in the vacuum column (605) condense in the packing bed in the upper section, while the liquid, which is light VGO, is removed from the tray with a gas duct under the top packing bed by a vacuum gas oil circulation pump (608) through a vacuum gas oil filter to remove solid particles and separated into four parts:
- the first part is cooled in a circulation cooler (609) of the vacuum column to a temperature of 40°C and recycled to a zone above the top packing bed of the vacuum column (605) for irrigating the column;
- the second part of the vacuum gas oil stream is recycled directly to the bottom packing bed of the vacuum column (605),
- the third part of the vacuum gas oil stream is directed from the vacuum column (605) through filter bypass via the tube space of the VGO heating heat exchanger into a VGO feedstock tank for further supply as feedstock for gas-phase hydrocracking, and
- the fourth part of the vacuum gas oil stream, after heating in the heat exchanger (610) to a temperature of 200-250°C, is supplied as a regenerated solvent to the spent additive separation unit (40).

Below the upper section (vacuum gas oil layer) of the vacuum column (605), another packing bed is located, where the vacuum gas oil is separated from the heavy vacuum gas oil. Heavy recycle vacuum gas oil is supplied using a pump (611) to the vacuum column (605) and used for internal circulation reflux. The balance quantity is removed by the pump beyond the unit (60).

The lowest part of the vacuum column (605) is the bottom settling tank for bottoms (heavy unconverted residue). The bottoms are pumped by a bottoms pump (612) of the vacuum column beyond the unit (60) and is then utilized to produce a sintering additive, fuel oil, bitumen products, etc. The hot bottoms stream passes through the recuperative heat exchanger (610) of the diluting vacuum gas oil, where light recycle gas oil is heated by the pump (608). A portion of the bottoms is fed to the very bottom of the vacuum column (605) for recirculation to mix with a high-viscosity dark petroleum product.

Optionally, each of the pumps (602, 608, 611, 612) can have a backup pump connected in parallel (602-1, 608-1, 611-1, 612-1). The presence of backup pumps increases the reliability of the entire apparatus and prevents the clogging of equipment by deposits in the event of any pump failure.

In an exemplary embodiment depicted in Fig. 5, the bottoms pumps (612, 612-1) of the vacuum column operate simultaneously, thus increasing the linear flow rate of the vacuum column bottoms to at least 1.5 m/s. This reduces the risk of sedimentation of remaining spent additive solid particles in the pipe and prevents the clogging of the equipment in the unit (60) for solvent regeneration and fractionation of purified petroleum products.

Thus, the products obtained in the unit (60) for solvent regeneration and fractionation of purified petroleum products are:
- a regenerated solvent separated through vacuum distillation, which is a light vacuum gas oil (LVGO);
- a vacuum purified gas oil (VPGO); and
- a separated heavy residue, which is a tar-hydrocracking residual product (THRP).

The composition of the resulting THRP is homogeneous, viscous, low-ash, with a fairly low sulfur content due to having undergone the hydrocracking step and is free of benzpyrenes (unlike coal tar pitch), which is important for the environment. This combination of properties is provided by several factors:
1. utilizing the residual product after distillation of a petroleum feedstock for the process of combined hydrocracking in a hydrogen environment, which lowers sulfur levels and avoids benzopyrene in the products of the process, particularly in the residual products;
2. employing a carbon additive with a high mesopore content, which effectively adsorbs asphaltenes of the feedstock; and
3. applying a solvent in the system for purifying an unconverted hydrocracking residue from a spent carbon additive to ensure optimal removal of the spent additive from the unconverted high-boiling hydrocracking residue, which is then fed to a thin-film evaporator after the vacuum column. Such effective removal of spent additives from hydrocracking residues can significantly lower the ash content in a concentrated hydrocracking residue.

The inventors hypothesized that the resulting residue has properties and composition which facilitate its use as a feedstock for preparing a sintering additive used in the production of metallurgical or foundry coke or electrode mass in the manufacture of carbon anodes, for example for the aluminum industry. This hypothesis has been validated through extensive experimentation.

Furthermore, the concentrated residue can be used to prepare petroleum coke or anode coke, for example, in a delayed coking unit.

Preferably, the residue is concentrated in evaporators. It is known from the prior art that examples of devices used for concentration of highly viscous media include devices with natural circulation or devices where evaporation occurs in a film.

The best results are achieved using thin-film evaporators.

The specified bottom residue (a separated heavy residue) is directed to evaporation step (7) in a thin-film evaporator (TFE) for concentration.

In this case, an important point for the quality of the sintering additive and distillate is the prevention of local overheating of the TFE, which leads to local coking of the film with a risk of the formation of larger volumes of coke deposits inside the apparatus. In the sintering additive, such coking-susceptible inclusions diminish sintering properties as a solid carbon fraction remains in the coked material, which loses its sintering properties and acts as ballast in the composition of the sintering additive.

Based on numerous tests, devices where the process occurs in a film formed on the inner surface of a stationary casing by a rotating rotor are deemed most efficient for producing sintering additives.

The main elements of these devices are a casing with a coaxially installed rotor and a distribution device. The film is created on the vertical surface of the casing by using a rotor with distribution scrapers mounted thereon.

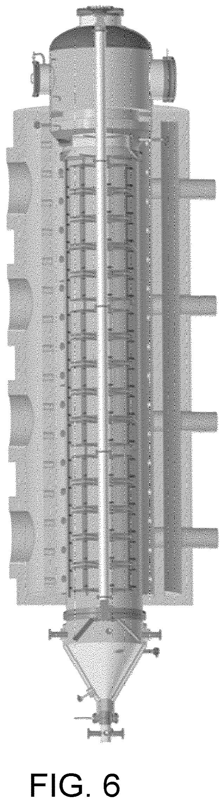

To prevent the specified unfavorable effect, namely the formation of local coking, the design was improved as follows. The TFE was equipped with a double jacket heated by flue gases fed into the outer jacket and then distributed into the inner jacket. As depicted in Fig. 6, this dual-jacket configuration ensures an even distribution of flue gases across the outer surface of the reactor (TFE) casing and avoids local overheating.

All other things being equal, the higher the heating temperature of the raw material, the better is the quality of the sintering additive in terms of "ring and ball softening temperature (R&B)", but the lower its yield becomes. The maximum temperature in the chamber is constrained by the potential for coke formation and the residence time of the mixture in the evaporator. The temperature is optimally maintained between 400 and 450°C.

The vacuum in the system can significantly reduce the temperature at which light hydrocarbons begin to evaporate, consequently diminishing the risk of coking in the released heavy residue. A reduction in the pressure facilitates a decrease in the volatile component content in the sintering additive, owing to enhanced evaporation conditions for intermediate products (or resins of secondary origin). The pressure is preferably set between minus 90 and minus 100 kPa.

The residence time of the feedstock in the apparatus is calculated based on the condition required to obtain a product with a residual mass fraction of volatile components of not more than 60%, and preferably ranges between 20 to 30 seconds.

It is desirable that the process be carried out from a film with a thickness not more than 1.5 mm, most preferably not more than 1.2 mm, and in the range of 1.1 to 1.15. Evaporation of a substance from a thin film of this specified thickness on the evaporator surface ensures high rates of heat and mass transfer. Moreover, the film thickness directly influences the quality of the resulting sintering additive, specifically, a lower quantity of volatile substances enhances sintering ability. Additionally, the film with a specified thickness according to the claimed method reduces the risk of coking. When a film is thicker, there is a risk of coking on the walls, and the scrapers may struggle to cope, potentially causing the rotor to jam. If the thickness is less than specified, the evaporation becomes excessively intense, preventing adequate drainage of the residue and leading to local build-ups, which in turn result in coking.

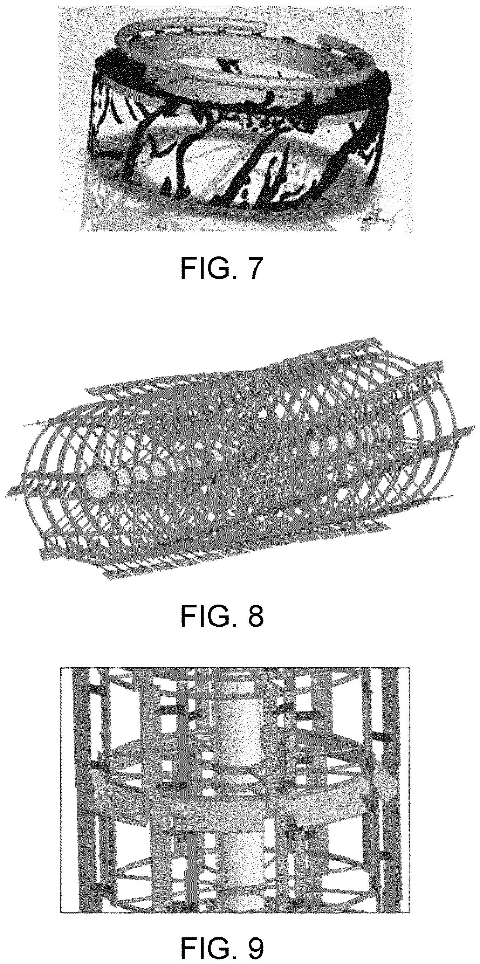

The feedstock (the stream of the separated heavy residue from the vacuum distillation column) is fed to the upper part of the reactor by a distribution device as shown in Fig. 7, through discrete feed points evenly spaced along the diameter of the distribution device. This input ensures additional prevention of the equipment from coking over time and the elimination of coking inclusions in the resulting sintering additive.

Uniform distribution of the feedstock along the height of the apparatus is ensured by the working elements (blades) of the rotor, distributed along the height of the rotor in the form of a spiral fragment, as shown in Fig. 8.

Stream redistributors are provided along the height of the apparatus, which are circle-shaped metal plates installed along the height of the reactor. The plates have grooves for scrapers. Their purpose is to ensure uniform application of the feedstock stream to the walls along the height of the reactor, thereby preventing stagnant zones. This arrangement is shown in Fig. 9.

The process may be intensified by supplying atmospheric oxygen to the lower part of the TFE at a rate of 40-50 L/hour, preferably 44-47 L/hour, even more preferably 45 L/hour, depending on the feedstock composition, as well as necessary requirements for the quality of the sintering additive. In this case, the process temperature can be reduced to 210-240°C.

The tar-hydrocracking concentrated residue (THCR) is extracted from the TFE bottom. In some embodiments, constant circulation of the THCR in the TFE bottom is achieved by its tangential introduction into the lower part of the TFE.

The TFE upper product, which is distillate vapors, is extracted from the reactor and condensed in a refrigerator. The condensed distillate is a heavy vacuum gas oil (HVGO), at least part of which is taken to processing step (8) to increase the content of aromatic hydrocarbons, particularly catalytic cracking, to produce a solvent for the system for purifying an unconverted hydrocracking residue from a carbon additive.

At least part of the HVGO is delivered to catalytic cracking in a mixture with one or more components of straight-run vacuum gas oil, hydrotreated vacuum gas oil from a combined hydrocracking unit, and fuel oil. The ratio between these four feed streams of a catalytic cracking unit can vary within wide ranges, wt.%:
- Hydrotreated feedstock (hydrotreated vacuum gas oil from a combined hydrocracking unit and/or fuel oil from a gas condensate processing unit) of 10 to 80; and
- Non-hydrotreated feedstock (HVGO and, optionally, straight-run vacuum gas oil) of 20 to 90.

It is important to recognize that an increase in the non-hydrotreated feedstock fraction leads to a higher yield of light gas oil from catalytic cracking. However, to prolong the catalyst life, it is advisable to dilute the non-hydrotreated feedstock with the hydrotreated feedstock. In addition, the non-hydrotreated feedstock fraction should not be increased, as this could adversely affect the quality of the main product - the catalysate, which is then used in the production of motor gasoline.

In the case of using fuel oil, it is important to note that straight-run fuel oil obtained by distillation from petroleum cannot be used for catalytic cracking in the classical sense. For catalytic cracking, fuel oil obtained from a gas condensate processing unit (GCPU) is used since in this case its properties are similar to vacuum gas oil obtained by distillation from petroleum, i.e. the GCPU fuel oil lacks heavy fractions (tar).

The TFE bottom product is a concentrated hydrocracking residue that can be used as a sintering additive for producing metallurgical coke.

The concentrated residue may undergo additional processing, for example, in a delayed coking unit, to yield petroleum coke or anode coke.

Thus, the present invention provides effective separation of the spent carbon additive and a mixture of the unconverted residue and solvent, stable operation of the system for purifying an unconverted residue of heavy petroleum feedstock hydrocracking process from a spent carbon additive with a specified productivity and prevents the clogging of equipment by deposits, which avoids long-term equipment downtime and labor-intensive work required to clean deposits from the equipment.

In addition, the present invention provides stable non-stop operation of the entire combined hydrocracking unit, products with improved characteristics, a stable conversion of up to 95%, while ensuring the processing of residual hydrocracking products into in-demand products.

According to the present invention, the stability of operation of a combined hydrocracking unit means continuous operation in established modes with a specified productivity.

### Example

Heavy petroleum feedstock, which is tar obtained after distillation of lower-boiling fractions from heavy Urals crude oil and has an initial boiling point of 510°C and a density at 20°C of more than 1000 kg/m³, is mixed with 1.5 wt.% (at mass of tar) of coal additives of two granulometric compositions: coarse fraction with a particle diameter of about 1 mm and a fine fraction with a particle diameter of about 0.3 mm. The coarse and fine fractions are characterized by different mesopore volumes: the BJH mesopore volume for the coarse and fine fractions is at least 0.12 cm³/g, facilitating more efficient adsorption of asphaltenes with a molecule size of 40 to 90 nm for the tar from Urals crude oil. The coal additive has a BET specific surface area of not less than 250-280 m²/g. Tar flow rate is 185 t/h.

The feedstock in the form of slurry is supplied to SPH, where hydrocracking occurs at a temperature of about 450°C and a pressure of about 20 MPa. A mixture of the carbon additive, tar, and gas pass through three sequentially located SPH reactors. The resulting mixture consists of gaseous products and slurry comprising a spent coal additive and an unconverted high-boiling residue. This mixture is delivered to the separation step, after which a gaseous stream is delivered to gas-phase hydrocracking, and the slurry is delivered to a spent additive separation unit (40).

A slurry of an unconverted high-boiling residue together with a solid spent additive, which has a flow rate of about 20 t/h, a temperature of 320°C and a pressure of about 1.15 MPa (gauge), is fed into a mixing tank (401) of a first section. Before entering into the mixing tank (401), to a slurry supply pipeline there are fed a solvent stream at a flow rate of 7 t/h, a temperature of 250°C, and a pressure of about 0.9 MPa (gauge), a recycle stream, which comprises a solvent from a separation tank (403) of the first section, at a flow rate of 14 t/h, a temperature of 285°C, and a pressure of about 0.45 MPa (gauge), and a recycle stream, which comprises a solvent from a separation tank (406) of a second section, at a flow rate of 58 t/h, temperature 260°C and pressure of about 0.3 MPa (gauge). These streams are pre-mixed in the pipeline and then fed into the mixing tank (401) of the first section, where they are mixed using a stirrer with double mechanical seal, wherein a temperature and a pressure in the tank (401) are maintained at 306°C and 0.22 MPa, respectively. A pump (402) pumps the resulting mixture further with a flow rate of 100 t/h and a pressure of 0.9 MPa (gauge). A portion of this mixture is recycled to the mixing tank (401) of the first section to enhance mixing through such circulation, and a portion of the mixture is fed into a hydrocyclone in the separation tank (403) of the first section. The pressure difference between upper and lower outlets of the hydrocyclone is maintained at 0.05 MPa, while the pressure in the separation tank (403) is maintained at 0.35 MPa (gauge) and the temperature is kept at 290°C. A light upper stream, predominantly liquid phase, is partially recycled to the mixing tank (401) of the first section at a flow rate of 14 t/h and partially sent to a buffer tank (601) of a unit (60) for solvent regeneration and fractionation of purified petroleum products at a flow rate of 41 t/h and a pressure of 0.4 MPa (gauge). A heavier lower stream from the hydrocyclone, predominantly wet solid phase, is drained into an internal space of the separation tank (403) and then to a mixing tank (404) of a second section at a flow rate of about 45 t/h. The flow rate of the heavy lower stream from the tank (403) to the tank (404) is controlled by valves.

The wet solids stream entering the mixing tank (404) of the second section from the separation tank (403) of the first section is mixed with the liquid-phase recycle stream comprising a solvent from a separation tank (409) of a third section and with a slurry stream from a battery hydrocyclone apparatus (603). These liquid phase stream and slurry stream are supplied to a wet solids supply pipeline before the introduction into the mixing tank (404) of the second section. The tank (404) is maintained at a temperature of 265°C and a pressure of 0.20 MPa. A pump (405) pumps the resulting mixture further at a flow rate of 100 t/h and a pressure of 0.9 MPa. A portion of this mixture is recycled to the mixing tank (404) of the second section to enhance mixing through such circulation, and a portion of the mixture is fed into a hydrocyclone in the separation tank (406) of the second section. The pressure difference between upper and lower outlets of the hydrocyclone is maintained at 0.05 MPa, while the pressure in the separation tank (406) is maintained at a level of 0.35 MPa (gauge) and the temperature is kept at 260°C. A light upper stream, predominantly liquid phase, is recycled to the mixing tank (401) of the first section at a flow rate of 58 t/h. A heavier lower stream from the hydrocyclone, predominantly wet solid phase, is drained to an internal space of the separation tank (406) and then to a mixing tank (407) of the third section. The flow rate of the heavy lower stream from the tank (406) to the tank (407) is about 35 t/h and is controlled by valves in the pipeline.

The wet solids stream entering the mixing tank (407) of the third section from the separation tank (406) of the second section is mixed with the solvent at a flow rate of 20 t/h from the unit (60) for solvent regeneration and fractionation of purified petroleum products and with the slurry stream from the battery hydrocyclone apparatus (603). These streams of the solvent and slurry are supplied to the wet solids supply pipeline before the introduction into the mixing tank (407) of the third section. The tank (407) is maintained at a temperature of 255°C and a pressure of 0.20 MPa(gauge). A pump (408) pumps the resulting mixture further at a flow rate of 100 t/h and a pressure of 0.9 MPa. A portion of this mixture is recycled to the mixing tank (407) of the third section to enhance mixing through such circulation, and a portion of the mixture is fed into a hydrocyclone in the separation tank (409) of the third section. The pressure difference between upper and lower outlets of the hydrocyclone is maintained at 0.05 MPa, while the pressure in the separation tank (409) is maintained at 0.26 MPa(gauge) and the temperature is maintained at 240°C. A light upper stream, predominantly liquid phase, is recycled to the mixing tank (404) of the second section. A heavier lower stream from the hydrocyclone, predominantly wet solid phase, is drained into an internal space of the separation tank (409) and then by gravity to a drum dryer (501) of a spent additive drying unit (50) at a flow rate of 5 t/h. The flow rate of the heavy lower stream from the tank (409) to the drum dryer (501) is controlled by valves.

In an exemplary embodiment of the present invention, the solvent is an aromatic light catalytic cracking gas oil.

In the drum dryer (501), the wet solids are heated to 500°C to completely evaporate liquid hydrocarbons, including the solvent. The drum dryer (501) is positioned at an angle of 2° and rotates slowly (about 2 rpm), thereby gradually moving solids through the dryer and removing them from the dryer. A solid particle stream with hydrocarbon residues is discharged from the drum dryer (501) through a double valve (502) and fed into a drum cooler (503), where the spent carbon additive is cooled to a temperature of not more than 60°C. Then, the cooled spent carbon additive enters a crusher (504), where it is crushed into fine particles. Then, the spent carbon additive is transferred to a solid particle storage (505), from which it can be unloaded as a commercial product into a shipping container.

The solvent evaporated from the drum dryer is partially condensed and sent to the buffer tank (601) of the unit for solvent regeneration and fractionation of purified petroleum products. In an exhaust gas pipeline running from the drum dryer, a mechanical device is installed inside the pipe, which prevents the pipe from clogging by fine dust particles of the spent additive by removing deposits of the spent carbon additive particles adhering to the wall. In an exemplary embodiment, the mechanical device is an electrically driven pusher, which is used to remove carbon dust deposits adhering to the wall, transfer the dust to a settling hopper, and clearing an internal section of the pipeline in the exhaust gas pipeline. The pusher can be equipped with cutters to intensify the removal of carbon dust deposits adhering to the wall.

After the spent additive separation unit (40) and the spent additive drying unit (50), the spent carbon additive is removed from the process. The separated unconverted high-boiling residue mixed with aromatic light catalytic-cracking gas oil, further purified in a hydrocyclone apparatus (603) comprising several hydrocyclones, and heated in a heater (604) to a temperature of about 310°C, passes into a vacuum column. The vacuum in an upper part of the vacuum column is from 10 to 30 mmHg, the pressure difference between a bottom part of the vacuum column and a bottom packing bed, including a "blind" tray, is not more than 15 mmHg, and the temperature of the bottom of the vacuum column is about 255°C.

The products obtained through the vacuum distillation process are:
- a regenerated solvent separated through vacuum distillation, which is a light vacuum gas oil (LVG);
- a vacuum purified gas oil (VPGO); and
- a separated heavy residue, which is a tar-hydrocracking residual product (THRP).

The solvent obtained through the vacuum distillation process is supplied to the inlet of the mixing tank (401) of the first section and/or to the inlet of the mixing tank (407) of the third section.

The heavy residue (bottom residue) obtained by the above method has the following physical and mechanical properties:

**Table 1**

| | | |
|---|---|---|
| 1 | Density at 15°C, kg/m³ | 1.054 |
| 2 | Flash point in open cup, °C | 195 |
| 3 | Mass fraction of sulfur, % by weight | 1.945 |
| 4 | Coking capacity, % by weight | 21.21 |
| 5 | Dynamic viscosity, cPs | |
| | at 200°C | 221 |
| | at 240°C | 45 |
| 6 | Factional composition, % by weight | |
| | Initial boiling point, °C | 340 |
| | 130-180°C Fraction | |
| | 180-200°C Fraction | |
| | 200-340°C Fraction | |
| | 340-460°C Fraction | 22.98 |
| | **Residue, more than 460°C** | **77.02** |
| | 460-480°C Fraction | 7.60 |
| | 480-500°C Fraction | 7.60 |
| | 500-540°C Fraction | 14.80 |
| | **Residue, more than 540°C** | **47.02** |
| 7 | Asphaltenes, % by weight | 20.69 |
| 8 | Carbenes, % by weight | 1.01 |
| 9 | Carboids, % by weight | 2.27 |
| 10 | Setting point, °C | plus 30 |

The above bottom residue (the separated heavy residue) was fed through a manifold comprising discrete feed points to a thin-film evaporator (TFE) for concentration.

The temperature in the reactor was maintained at 400°C. The pressure in the reactor was maintained at minus 95 kPa.

The film thickness was 1.12 mm and was constant along the height of the apparatus.

The residence time of the feedstock in the apparatus for the above-mentioned bottom residue and the specified film thickness was set on 20 seconds.

The distillate obtained by the method of the present invention had the following characteristics:

**Table 2**

| **No.** | **Parameter** | **Test method** | **Test results (average data)** |
|---|---|---|---|
| 1 | Density at 20°C, kg/cm³ | GOST 3900 | 982.1 |
| 2 | Mass fraction of sulfur, % | GOST P 51947 | 1.93 |
| 3 | Coking capacity, % by weight | EN ISO 10370 | 1.55 |
| 4 | Factional composition: | | |
| | - initial boiling point, °C | ASTM D 86 | 302 |
| | - distilled at 400°C, % | | 37 |
| 5 | Kinematic viscosity at 50°C, mm²/s | ΓOCT 33 | 56,12 |
| 6 | Setting temperature, °C | GOST 20287 (Method B) | 23.4 |
| 7 | Flash point in closed cup, °C | ASTM D 93 | 175.4 |
| 8 | Asphaltenes content, mg/kg | Total 642 | 710.6 |
| 9 | Metal content | | |
| | Sodium, mg/kg | ASTM D 5863 | 1.02 |
| | Iron, mg/kg | | 20.32 |
| | Nickel, mg/kg | | 2.51 |
| | Vanadium, mg/kg | | 1.05 |

The concentrated tar-hydrocracking residue produced by the proposed method had the characteristics given in Table 3:

**Table 3**

| Determined parameters | Unit of meas. | Test results | Document for test method |
|---|---|---|---|
| Ash content, dry state, A^{d} | % | 0,6 | GOST 22692-77 |
| Mass fraction of volatile substances, dry state, V^{d} | % | 52,4 | GOST 22898-78 |
| Mass fraction of total sulfur, dry state, Sₜ^{d} | % | 2,23 | GOST 32465-2013 |
| Mass fraction of total carbon, dry state, C^{d} | % | 87,3 | GOST 32979-2014 |
| Mass fraction of water, W | % | 0,1 | GOST 2477-2014 |
| Mass fraction of substances insoluble in toluene, α | % | 25 | GOST 7847-2020 |
| Mass fraction of substances insoluble in quinoline, α₁ | % | 5 | GOST 10200-2017 |
| R&B Softening point (melting point), T | *°C* | 113 | GOST 9950-2020 |
| B&R Softening point (melting point), T | *°C* | 128 | GOST 11506-1973 |
| Softening (melting) temperature according to Mettler, T | *°C* | 131 | GOST 32276-2013 |
| Gray-King coke type | type | G₁₃ | GOST 16126-91 (ISO502-82) |
| Coking index, G (1:5) | unit | 80 | GOST ISO 15585-2013 |
| Coking index, G (1:7) | unit | 68 | GOST ISO 15585-2013 |

These parameters make it possible to use THCR as a sintering additive to produce metallurgical coke, foundry coke, or anodes for the aluminum industry, which have excellent sintering properties similar to the sintering properties of coal-tar pitches.

Industrial tests of the claimed method demonstrate the possibility of achieving productivity for raw materials, in particular for tar, of at least 2,600,000 tons per year.

## Claims

1. A unit (40) for separating a spent additive from an unconverted residue of heavy petroleum feedstock hydrocracking process, the unit comprising three sections, each including a mixing tank (401, 404, 407), a pump (402, 402-1, 405, 405-1, 408, 408-1), and a separation tank (403, 406, 409), wherein
a mixing tank (401) of a first section is configured to mix a slurry stream, which comprises a carbon additive and the unconverted residue of heavy petroleum feedstock hydrocracking process, with a solvent, a recycle stream from a separation tank (403) of the first section, and a recycle stream from a separation tank (406) of a second section to reduce the viscosity and concentration of the slurry; a pump (402) is configured to supply a slurry mixture from the mixing tank (401) to a hydrocyclone in the separation tank (403), which is configured to separate the slurry mixture and direct an upper stream from the hydrocyclone partially back to the mixing tank (401) of the first section and partially to a buffer tank (601) of a unit (60) for solvent regeneration and fractionation of purified petroleum products, as well as to direct a lower stream from the hydrocyclone to an internal space of the separation tank (403) and further to a mixing tank (404) of the second section;
the mixing tank (404) of the second section is configured to mix the stream from the separation tank (403) of the first section with a recycle stream from a separation tank (409) of a third section; a pump (405) of the second section is configured to supply a slurry mixture from the mixing tank (404) of the second section to a hydrocyclone in the separation tank (406) of the second section, which is configured to separate the slurry mixture, recycle an upper stream from the hydrocyclone to the mixing tank (401) of the first section and direct a lower stream from the hydrocyclone into an internal space of the separation tank (406) and further to a mixing tank (407) of the third section;
the mixing tank (407) of the third section is configured to mix the stream from the separation tank (406) of the second section with the solvent; a pump (408) of the third section is configured to supply a slurry mixture from the mixing tank (407) of the third section to a hydrocyclone in the separation tank (409) of the third section, which is configured to separate the slurry mixture and direct an upper stream from the hydrocyclone into the mixing tank (404) of the second section, as well as to direct a lower stream from the hydrocyclone to an internal space of the separation tank (409) and further to a drum dryer of a spent additive drying unit (50);
wherein the upper stream from each hydrocyclone includes a mixture of the unconverted residue and the solvent, and the lower stream from each hydrocyclone includes a wet spent carbon additive.

2. The unit (40) for separating a spent additive according to claim 1, wherein an upper fitting of the hydrocyclone is directly connected to an upper fitting of the separation tank.

3. The unit (40) for separating a spent additive according to claim 1, wherein the solvent is an aromatic light catalytic-cracking gas oil and/or a regenerated solvent from the unit (60) for solvent regeneration and fractionation of purified petroleum products.

4. The unit (40) for separating a spent additive according to claim 1, wherein a gas cushion is provided in an upper part of the separation tank (403, 406, 409) to control a fluid level in the tank and regulate drainage from the tank.

5. The unit (40) for separating a spent additive according to claim 1, wherein a solvent supply pipeline and recycle stream supply pipelines from the separation tank of the first section and the separation tank of the second section are connected to a supply pipeline for the slurry stream comprising the carbon additive and the unconverted residue of heavy petroleum feedstock hydrocracking process, before the mixing tank (401) of the first section, thereby enabling pre-mixing of the streams.

6. The unit (40) for separating a spent additive according to claim 1, wherein the mixing tank (401, 404, 407) includes a two-valve system, wherein one valve is configured to supply natural gas to the tank, and the other valve is configured to relieve excess pressure in order to control the pressure in the tank.

7. The unit (40) for separating a spent additive according to claim 1, wherein the flow rate of the lower stream from the separation tank to the mixing tank is controlled by a valve.

8. The unit (40) for separating a spent additive according to claim 7, wherein in pipeline sections from the separation tanks to the mixing tanks, valves are mounted at a minimum distance beneath the separation tanks.

9. The unit (40) for separating a spent additive according to claim 7, wherein two pneumatic vibrators are installed on valve assemblies beneath the separation tanks, wherein one pneumatic vibrator is positioned before the valve, and the other is positioned after the valve.

10. The unit (40) for separating a spent additive according to claim 1, wherein the mixing tank (404) of the second section is configured to mix the stream from the separation tank (403) of the first section with the recycle stream from the separation tank (409) of the third section and with a stream from a hydrocyclone apparatus (603) of the unit (60) for solvent regeneration and fractionation of purified petroleum products.

11. The unit (40) for separating a spent additive according to claim 1, wherein the mixing tank (407) of the third section is configured to mix the stream from the separation tank (406) of the second section with the solvent from the unit (60) for solvent regeneration and fractionation of purified petroleum products, and with the stream from the hydrocyclone apparatus (603) of the unit (60) for solvent regeneration and fractionation of purified petroleum products.

12. A unit (50) for drying a spent carbon additive separated from a slurry of the carbon additive and an unconverted residue of heavy petroleum feedstock hydrocracking process, the unit including a drum dryer (501), a drum cooler (503) and a crusher (504), wherein
the drum dryer (501) is configured to evaporate liquid hydrocarbons, including a solvent, from a wet spent carbon additive received from a unit (40) for separating a spent additive, and supply them, after condensation, to a buffer tank (601) of a unit (60) for solvent regeneration and fractionation of purified petroleum products, and to discharge particles of the dry spent additive into the drum cooler (503) configured to cool the spent carbon additive for feeding it into the crusher (504) that is configured to crush the cooled spent carbon additive;
wherein, in an exhaust gas pipeline running from the drum dryer, which is configured to remove gases from the drum dryer, including evaporated hydrocarbons and steam, a mechanical device is installed to remove sediments of dust-like particles of the spent carbon additive adhering to the wall.

13. The unit (50) for drying a spent carbon additive according to claim 12, wherein the mechanical device is an electrically driven pusher.

14. The unit (50) for drying a spent carbon additive according to claim 13, wherein the pusher is equipped with cutters.

15. The unit (50) for drying a spent carbon additive according to claim 12, wherein a condensate drain pipeline is provided in the exhaust gas pipeline, and a low-pressure steam is supplied through a nozzle into the condensate drain pipeline.

16. The unit (50) for drying a spent carbon additive according to claim 12, wherein in the exhaust gas pipeline, there is provided a supply of a superheated steam.

17. A unit (60) for solvent regeneration and fractionation of purified petroleum products, including a buffer tank (601) for storing feedstock to be fed to a vacuum column, a vacuum column pump (602) for feedstock, a hydrocyclone apparatus (603) for additional purification of a stream of spent carbon additive particles, a heater (604), and a vacuum column (605) for separating a solvent and a heavy unconverted residue of heavy petroleum feedstock hydrocracking, wherein
the buffer tank (601) is configured to receive and collect a mixture stream of the unconverted hydrocracking residue and a solvent from a separation tank (403) of a spent additive separation unit and a stream, which is a condensate of hydrocarbon vapors discharged from a drum dryer (501) of a unit (50) for drying a spent carbon additive;
the vacuum column pump (602) for feedstock is configured to supply the feedstock from the buffer tank (601) to the hydrocyclone apparatus (603), which is configured to purify the feedstock and to direct a lower stream including a slurry of the spent carbon additive particles, to a mixing tank (404) and/or to a mixing tank (407) of a unit (40) for separating a spent additive, and to direct an upper stream of the hydrocyclone apparatus (603), including a purified product, for heating to the heater (604) and further to the vacuum column (605);
the vacuum column is configured to produce a regenerated solvent to be directed to the unit (40) for separating the spent additive and bottoms of the vacuum column, which are unconverted residues of heavy petroleum feedstock hydrocracking process purified from the spent carbon additive.

18. The unit (60) for solvent regeneration and fractionation of purified petroleum products according to claim 17, wherein the hydrocyclone apparatus is a battery hydrocyclone apparatus including several hydrocyclones, wherein each of the hydrocyclones can be put off or into operation to regulate the performance of the unit.

19. A system for purifying an unconverted residue of heavy petroleum feedstock hydrocracking process from a spent carbon additive, including:
- the unit (40) for separating a spent additive according to any one of claims 1-11,
- the unit (50) for drying a spent carbon additive according to any one of claims 12-16, and
- the unit (60) for solvent regeneration and fractionation of purified petroleum products according to claim 17 or 18.

20. A method for purifying an unconverted residue of heavy petroleum feedstock hydrocracking process from a spent carbon additive, performed using the system according to claim 19, the method comprising the steps of:
- supplying a slurry comprising a carbon additive and the unconverted residue of heavy petroleum feedstock hydrocracking process, and a solvent to the unit (40) for separating a spent additive;
- delivering a wet spent carbon additive from the unit (40) for separating a spent additive to the unit (50) for drying a spent carbon additive;
- evaporating the solvent from the wet spent carbon additive in the unit (50) for drying a spent carbon additive, then cooling and crushing the dry spent carbon additive;
- removing the mixture of the unconverted hydrocracking residue and the solvent from the unit (40) for separating a spent additive, and a solvent vapor condensate from the unit (50) for drying a spent carbon additive, and supplying them to the unit (60) for solvent regeneration and fractionation of purified petroleum products; and
- producing, in the unit (60) for solvent regeneration and fractionation of purified petroleum products, a regenerated solvent, which is delivered to the unit (40) for separating a spent additive, and a purified unconverted residue of heavy petroleum feedstock hydrocracking process.

21. A method for processing heavy petroleum feedstock, comprising the steps of:
- slurry-phase hydrocracking (SPH) of feedstock comprising a heavy petroleum feedstock and a carbon additive, followed by separation into an SPH-subjected feedstock stream and a heavy residue stream, wherein the heavy residue stream is a slurry of an unconverted high-boiling residue and a spent carbon additive;
- hydrocracking of the feedstock hydrocracking products obtained in the SPH step, in a gas phase with a fixed bed catalyst, followed by fractionation of resulting hydrocracking products;
- performing the method for purifying an unconverted residue of heavy petroleum feedstock hydrocracking process from a spent carbon additive according to claim 20 to obtain the spent carbon additive and a purified unconverted residue of heavy petroleum feedstock hydrocracking.
